# EUROPEAN PATENT APPLICATION

(11) **EP 4 737 227 A1**
(43) Date of publication of application: **06.05.2026**
(21) Application number: 24831597.0
(22) Date of filing: 05.06.2024
(51) Int. Cl.: B60R 21/213, B60R 21/201

(54) **CURTAIN AIRBAG DEVICE**

(30) Priority: 30.06.2023 JP 2023108351; 08.02.2024 JP 2024018048
(71) Applicant: Autoliv Development AB, 44783 Vargarda (SE)
(72) Inventor: KOBAYASHI, Yuto, Yokohama-shi, Kanagawa 222-8580 (JP); OKA, Shinya, Yokohama-shi, Kanagawa 222-8580 (JP)
(74) Representative: Müller Verweyen
(86) International application number: PCT/JP2024/020545
(87) International publication number: WO 2025/004727

(57) **Abstract**

To maintain the stowed form of an airbag cushion and ensure smooth expansion and deployment with a simple and cost-effective configuration.

RESOLUTION MEANS

The curtain airbag device 100 includes a mini-wrap 138 and a deployment-assisting fabric 152 that are wrapped around the airbag cushion 102 in the stowed form, a connecting part 168 that connects the mini-wrap 138 and the deployment-assisting fabric 152 to the airbag cushion 102, and a cover member 136 that covers the airbag cushion 102 in the stowed form. A first region 172 of the deployment-assisting fabric 152 has a dimension L1 from the connecting part 168 to a second side 172b that falls within a range H1 from the connecting part 168 of the mini-wrap 138 to an opening part 140. A second region 174 has a dimension L2 from the connecting part 168 to a second side 174b that is larger than that of the first region 172. The deployment-assisting fabric 152 is arranged so that the second region 174 overlaps the end part 176 of the cover member 136.

## Description

### TECHNICAL FIELD

The present invention relates to a curtain airbag device that protects an occupant in the event of a vehicle side collision or rollover.

### BACKGROUND ART

In recent years, airbag devices have become standard equipment in most vehicles as a safety device. A typical airbag device senses an impact with a sensor and activates an inflator, which is a gas generator, causing an airbag cushion to expand and deploy with the gas pressure. The airbag cushion, for example, in a front airbag device, is folded and stowed at a center of a steering wheel, and, in a curtain airbag device, is stowed in a wound state or the like in the vicinity above side doors of a vehicle cabin.

In the curtain airbag device described above, since the airbag cushion has a long shape, the stowed form is maintained using a strip-shaped fabric material, tape, or the like. Furthermore, for example, in the head protection airbag device of Patent Document 1, as described in paragraph 0060 and FIG. 13, a resin guide plate 45 and a fabric belt 56 are used as means for regulating the deployment direction of the airbag body. In the technology of Patent Document 1, as described in paragraphs 0044, 0060, and the like, a fabric belt 56 is used to cover the upper end part 49A of a garnish 49, thereby preventing an airbag body 16 from entering gaps around this upper end 49A.

### RELATED ART DOCUMENTS

### PATENT DOCUMENTS

Patent Document 1: Japanese Unexamined Patent Application 2000-33845

### SUMMARY OF THE INVENTION

In the technology of Patent Document 1, as depicted in FIGS. 1 and 2, a metal plate 42 is provided above a center pillar garnish 49, and then the above-mentioned guide plate 45 and fabric belt 56 are provided. However, the configuration of the Cited Document 1 uses a large number of metal and resin members. Currently, there is a demand for simpler and less costly means to avoid interference between the airbag cushion and surrounding structures.

### PROBLEM TO BE SOLVED BY THE INVENTION

In light of the above problems, an object of the present invention is to provide a curtain airbag device that has a simple and low-cost configuration and is capable of maintaining the stowed form of the airbag cushion and achieving smooth expansion and deployment.

### MEANS FOR SOLVING THE PROBLEM

To resolve the problem described above, a typical configuration of a curtain airbag device according to the present invention includes:
an airbag cushion that is wound or folded into a stowed form elongated in a vehicle front-to-back direction and attached to an upper part of a vehicle cabin side wall; and
an inflator that supplies gas to the airbag cushion, wherein
the curtain airbag device further includes:
   a tab having a band shape, the tab protruding upward from the airbag cushion in the stowed form and being secured to the vehicle cabin side wall;
   a deployment-assisting fabric having a fabric shape with a first side connected to the airbag cushion in the stowed form and a second side that is free;
   a connecting part that connects the first side of the deployment-assisting fabric to the airbag cushion;
   a mini-wrap protruding from a prescribed location on the second side of the deployment-assisting fabric;
   an opening part formed in the mini-wrap and configured to be hooked onto the tab; and
   a cover member extending along a prescribed area in a longitudinal direction of the airbag cushion in the stowed form and covering the vehicle cabin side wall side of the airbag cushion, wherein
   the deployment-assisting fabric is maintained in a state wrapped around the airbag cushion in the stowed form by hooking the opening of the mini-wrap onto the tab,
   the deployment-assisting fabric includes:
      a first region formed in an area in which the mini-wrap is provided; and
      a second region provided adjacent to the first region in the longitudinal direction of the airbag cushion in the stowed form, the second region having a dimension from the connecting part to the second side that is greater than that of the first region, and
      the deployment-assisting fabric is arranged such that the second region overlaps at least an end part of the cover member.

With the above configuration, when the stowed form of the airbag cushion is released and the airbag cushion expands and deploys, the second region of the deployment-assisting fabric covers gaps, steps, and the like between the cover member and surrounding vehicle cabin side wall and pillars, thereby enabling prevention of interference of the airbag cushion with these gaps and the like. Therefore, with the above configuration, the deployment behavior of the airbag cushion can be smoothly maintained, and the airbag cushion can be quickly expanded and deployed within a desired area. In addition, with the above configuration, the configuration is simple and the use of parts made of other materials is suppressed; thereby suppressing increases in manufacturing costs.

The mini-wrap may be belt-shaped and attached to the deployment-assisting fabric so that the opening part protrudes from the second side of the deployment-assisting fabric.

According to the configuration described above, the deployment-assisting fabric can be efficiently wrapped around the periphery of the airbag cushion in the stowed form using the mini-wrap.

The connecting part connects the mini-wrap to the airbag cushion together with the first side of the deployment-assisting fabric, and the first region may have a dimension from the connecting part to the second side that falls within an area from the connecting part of the mini-wrap to the opening part.

With the configuration described above as well, the deployment-assisting fabric can be efficiently wrapped around the periphery of the airbag cushion in the stowed form using the mini-wrap.

The mini-wrap described above has a weakened part provided in an area between the connecting part and the opening part, the weakened part enabling rupture of the mini-wrap during expansion and deployment of the airbag cushion, and the second side of the first region is positioned, in a circumferential direction of the airbag cushion in the stowed form, between the weakened part of the mini-wrap and the opening part.

According to the above configuration, the mini-wrap ruptures starting from the weakened part immediately after the start of expansion of the airbag cushion, thereby efficiently releasing wrapping. In addition, when the first region of the deployment-assisting fabric has a dimension such that the second side is positioned between the weakened part of the mini-wrap and the opening part, pinching between the airbag cushion and the tab is avoided, thereby enabling efficient deployment.

The mini-wrap may be formed integrally with the deployment-assisting fabric. With this configuration as well, the deployment-assisting fabric can be efficiently wrapped around the periphery of the airbag cushion in the stowed form using the mini-wrap.

The mini-wrap may have a weakened part provided at a prescribed location, the weakened part being configured to rupture during expansion and deployment of the airbag cushion and to separate an area including the opening part from the deployment-assisting fabric.

With the above configuration as well, the mini-wrap ruptures starting from the weakened part immediately after the start of expansion of the airbag cushion, thereby efficiently releasing wrapping.

A typical configuration of a curtain airbag device according to the present invention includes:
an airbag cushion that is wound or folded into a stowed form elongated in a vehicle front-to-back direction and attached to an upper part of a vehicle cabin side wall; and
an inflator that supplies gas to the airbag cushion, wherein
the curtain airbag device further includes:
   an inflator insertion part into which the inflator is inserted; and
   a deployment-assisting fabric having a fabric shape with a first side connected to the airbag cushion in the stowed form by a prescribed connecting part and a second side that is free, and
   the deployment-assisting fabric includes:
      a first region formed, in a longitudinal direction of the airbag cushion in the stowed form, on the inflator insertion part side; and
      a second region provided, in the longitudinal direction, on a side opposite to the inflator insertion part as viewed from the first region, the second region having a dimension from the connecting part to the second side that is greater than that of the first region.

With the above configuration as well, when the stowed form of the airbag cushion is released and the airbag cushion expands and deploys, the second region of the deployment-assisting fabric covers gaps, steps, and the like between the cover member and surrounding vehicle cabin side wall and pillars, thereby enabling prevention of interference of the airbag cushion with these gaps and the like. In addition, by providing the first region having a short dimension on the inflator insertion part side, expansion and deployment of the airbag cushion can be achieved without causing gas blockage due to wrapping of the deployment-assisting fabric, or in other words, without blocking gas flow by the deployment-assisting fabric. As the airbag cushion expands and deploys from the inflator insertion part side, the wrapping of the deployment-assisting fabric is smoothly released, enabling rapid expansion and deployment of the airbag cushion to the desired area.

The second side of the second region may protrude in a stepped manner from the second side of the first region.

The deployment-assisting fabric having the configuration described above also covers gaps and steps between the cover member and surrounding structures, enabling prevention of the airbag cushion interfering with these gaps and steps.

The second side of the second region may be tapered so that the dimension of the second region gradually widens from the first region.

The deployment-assisting fabric having the configuration described above also covers gaps and steps between the cover member and surrounding structures, enabling prevention of the airbag cushion interfering with these gaps and steps.

The second side of the first region may be tapered so that the dimension of the first region gradually widens toward the second region.

The deployment-assisting fabric having the configuration described above also covers gaps and steps between the cover member and surrounding structures, enabling prevention of the airbag cushion interfering with these gaps and steps.

The second side of the deployment-assisting fabric may be tapered so that the dimension of the deployment-assisting fabric gradually widens from the end part on the first region side toward the end part on the second region side.

The deployment-assisting fabric having the configuration described above also covers gaps and steps between the cover member and surrounding structures, enabling prevention of the airbag cushion interfering with these gaps and steps.

The mini-wrap may be formed of nonwoven fabric. **If** the mini-wrap is formed of nonwoven fabric, the mini-wrap can be broken smoothly in accordance with the expansion and deployment of the airbag cushion.

The weakened part may be formed by a slit. If the weakened part is formed by a slit, the mini-wrap can be broken smoothly.

The connecting part may integrally join the mini-wrap, the first side of the deployment-assisting fabric, the first end of the tab, and the non-expandable part of the airbag cushion.

This configuration enables the mini-wrap, the deployment-assisting fabric, and the tab to be suitably connected to the non-expandable part of the airbag cushion.

The curtain airbag device may further include tapes provided on both sides of the mini-wrap for wrapping the deployment-assisting fabric around the airbag cushion in the stowed form, the tapes being breakable by the expansion pressure of the airbag cushion.

According to the above configuration, by using the tape together with the mini-wrap, the stowed form of the airbag cushion can be maintained efficiently.

### EFFECT OF THE INVENTION

With the present invention, a curtain airbag device that is capable of maintaining the stowed form of the airbag cushion and achieving smooth expansion and deployment can be provided with a simple and cost-effective configuration.

### BRIEF DESCRIPTION OF THE DRAWINGS

FIG. 1 is a view that depicts an overview of a curtain airbag device according to an embodiment of the present invention;
FIG. 2 is a view depicting only the airbag cushion of FIG. 1;
FIG. 3 is an enlarged view depicting the vicinity of a tab in FIG. 2(b);
FIG. 4 is a view depicting the vicinity of the tab of the airbag cushion of FIG. 2(a);
FIG. 5 is various cross-sectional views of the airbag cushion of FIG. 2(a);
FIG. 6 is a view depicting an example of an appearance of the expansion and deployment of the airbag cushion in FIG. 5(a);
FIG. 7 is a view depicting an example of an appearance of the expansion and deployment of the airbag cushion in FIG. 5(b);
FIG. 8 is a view depicting an example of the airbag cushion of FIG. 3(b) in an initial state when expansion and deployment has begun;
FIG. 9 is a view depicting a modified example of the deployment-assisting fabric of FIG. 4(a);
FIG. 10 is a view depicting a modified example of the deployment-assisting fabric of FIG. 4(a);
FIG. 11 is a view depicting a modified example of the mini-wrap of FIG. 4;
FIG. 12 is an example in which tape is applied to the mini-wrap of FIG. 11;
FIG. 13 depicts a further modified example of the mini-wrap of FIG. 4; and
FIG. 14 is a view depicting a modified example of the airbag cushion of FIG. 4(a).

### EMBODIMENTS OF THE INVENTION

Preferred embodiments according to the present invention will hereinafter be described in detail with reference to the attached drawings. Dimensions, materials, other specific numerical values, and the like indicated in the embodiments are merely examples for ease of understanding of the invention and do not limit the present invention unless otherwise noted. Note that in the present specification and drawings, elements having essentially identical functions and configurations are labeled with identical symbols in order to omit redundant descriptions, and illustrations of elements not directly related to the present invention are omitted.

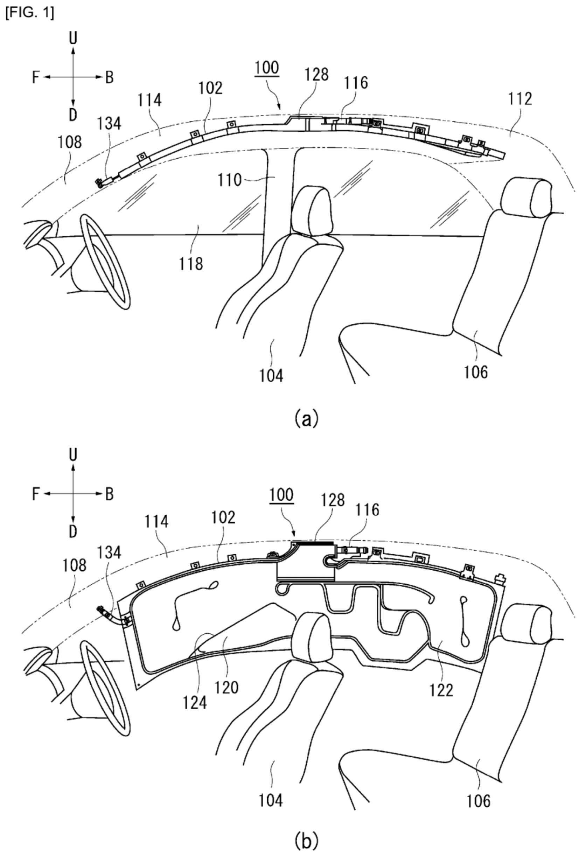

FIG. 1 is a view that depicts an overview of a curtain airbag device 100 according to an embodiment of the present invention. FIG. 1(a) is a diagram depicting a state before activation of the curtain airbag device 100. The curtain airbag device 100 depicted in the figure is for use on the right side of the vehicle cabin, but a left side airbag device (not depicted) also has a similar symmetrical structure.

Hereafter, regarding FIG. 1(a) and other figures, the front-to-back direction of a vehicle are depicted by the symbols F (Forward) and B (Back), the left and right sides of the vehicle by the symbols L (Left) and R (Right), and the top and bottom of the vehicle by the symbols U (Up) and D (Down). In particular, "upward" refers to a direction towards the head as viewed from an occupant properly seated on a seat, and "downward" refers to a direction towards the lower limbs as viewed from the occupant.

A vehicle is assumed to be a two-row vehicle with a front row seat 104 and back row seat 106 arranged from the front side of the vehicle. A vehicle is provided with a plurality of pillars that support the roof. The plurality of pillars includes, from the front of the vehicle, an A-pillar 108, a B-pillar 110, and a C-pillar 112.

An airbag cushion 102 is wound or folded into a long roll stowed form in the front-to-back direction of the vehicle, and is installed on a roof side rail 114 at the top of the side wall of the vehicle compartment. The installed airbag cushion 102 is covered by roof trim and is stowed in the space between the roof side rail 114 and the roof trim.

The curtain airbag device 100 has an inflator 116, which is a gas generator, on top of the airbag cushion 102, and the airbag cushion 102 is inflated by the pressure of the gas supplied from the inflator 116 to restrain the occupant.

In the present embodiment, the inflator 116 used is a cylinder type. Examples of currently prevailing inflators include: types filled with a gas-generating agent and configured to generate gas by combustion of the gas-generating agent; types filled with compressed gas and configured to supply gas without generating heat; and types provided with both a gas-generating agent and compressed gas. Any type of inflator 116 can be used.

When the vehicle experiences a side collision or rollover, a sensor provided in the vehicle senses the impact, which causes a signal to be sent to the inflator 116. Upon receiving this signal, the inflator 116 is activated and supplies gas to the airbag cushion 102.

FIG. 1(b) is a view depicting the state of the curtain airbag device 100 after activation. When the airbag cushion 102 receives gas from the inflator 116, the airbag expands and deploys downward along the vehicle cabin side wall, such as a side window 118 (see FIG. 1(a)), to protect the occupant.

The expansion region of the airbag cushion 102 is divided into a plurality of small compartments called chambers, taking into consideration the positions where the occupant may come into contact thereto. For example, a chamber 120 for protecting occupants of a front row seat 104 is provided at the front of the vehicle. Also, a chamber 122 for protecting occupants in a back row seat 106 is provided at the rear of the vehicle. These chambers are divided by a seam part 124 or the like, which is a linear non-expandable region.

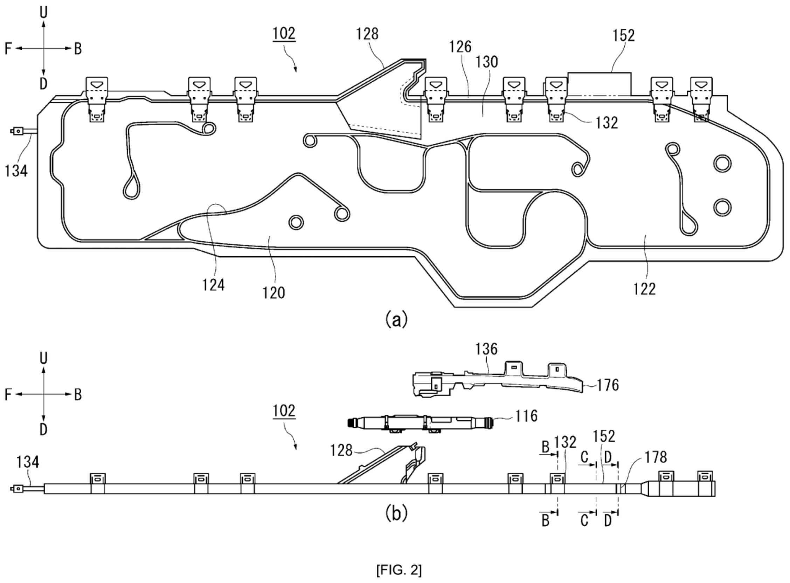

FIG. 2 is a view depicting only the airbag cushion 102 of FIG. 1. FIG. 2(a) is a view depicting only the airbag cushion 102 of FIG. 1(b).

The airbag cushion 102 is for use as a curtain airbag and has a large shape that extends along the side of the vehicle interior. The airbag cushion 102 is formed into a bag shape by overlapping two pieces of base fabric that constitute the surface and sewing or adhering them together, or by weaving using OPW (One-Piece Woven).

An inflator insertion part 128 is provided near the center of an upper edge 126 of the airbag cushion 102. The inflator insertion part 128 is provided in a shape that protrudes upward from an other upper edge 126 of the airbag cushion 102, and the gas ejection hole side of the inflator 116 (see FIG. 2 (b)) is inserted and attached.

The inflator insertion part 128 communicates with a duct part 130 extending in the front-to-back direction of the vehicle, and gas from the inflator 116 is supplied to each chamber through the duct part 130.

The airbag cushion 102 is provided with tabs 132 at various locations on the upper edge 126 as attachment points to the vehicle. The tabs 132 are strip-shaped and can be made from the same material as the expandable part of the airbag cushion 102. Although the tab 132 extends downward from the upper edge 126 of the airbag cushion 102 in FIG. 2(a), in practice the tab extends upward from the upper edge 126 for use. The tab 132 is secured to the roof side rail 114 (see FIG. 1(a)) using a member such as a clip or a bolt.

A strap 134 is also provided on the front-end side of the airbag cushion 102. The strap 134 is in the form of a thread and connects the airbag cushion 102 to the A-pillar 108 (see FIG. 1(b)). The strap 134 stabilizes the deployment behavior by suppressing swinging of the airbag cushion 102 during expansion and deployment, and also applies tension to the airbag cushion 102 in the front-to-back direction of the vehicle.

FIG. 2(b) is a view depicting only the airbag cushion 102 of FIG. 1(a). The airbag cushion 102 in the stowed form depicted in FIG. 2(b) is formed by rolling the airbag cushion 102 depicted in FIG. 2(a) from the bottom up.

The tab 132 is not wound or folded around the airbag cushion 102 in the stowed form, but is used in an exposed state, protruding upward from the airbag cushion 102 in the stowed form.

A cover member 136 is attached to the airbag cushion 102. The cover member 136 is made mainly of resin and has a shape that extends along the area near the inflator insertion part 128 in the longitudinal direction of the airbag cushion 102 in the stowed form. The cover member 136 supports the inflator and covers the roof side rail 114 (see FIG. 1(a)) side of the airbag cushion 102, preventing interference between the airbag cushion 102 and surrounding structures and providing a reaction force when the airbag cushion 102 expands and deploys.

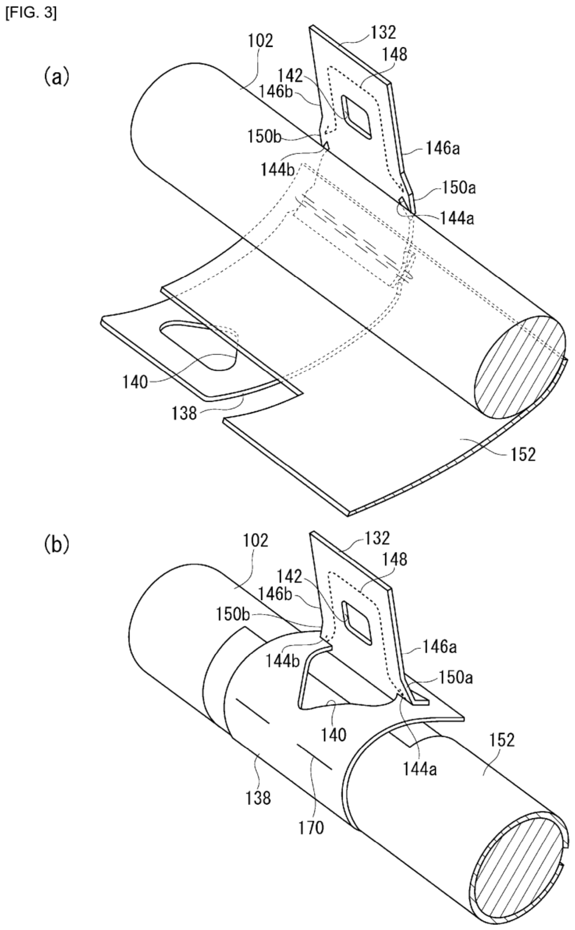

FIG. 3 is an enlarged view depicting the vicinity of the tab 132 in FIG. 2(b). FIG. 3(a) is a view depicting the airbag cushion 102 before the deployment-assisting fabric 152 and the mini-wrap 138 are wrapped around the airbag cushion.

The airbag cushion 102 is provided with a mini-wrap 138 along with the tab 132. The mini-wrap 138 is a strip-shaped member that is used to keep the airbag cushion 102 rolled up. The mini-wrap 138 enables the airbag cushion 102 to maintain a stowed form even before being mounted on the vehicle, facilitating transportation and assembly into the vehicle.

FIG. 3(b) is a view depicting a state in which the deployment-assisting fabric 152 and the mini-wrap 138 are wrapped around the airbag cushion 102 of FIG. 3(a). The mini-wrap 138 is provided with an opening part 140 on the tip end side. The opening part 140 is formed in a triangular shape with rounded corners, and can be hooked onto the tab 132 to form a temporary connection. The mini-wrap 138 is provided with a weakened part 170 such as a slit shape, which can be broken when the airbag cushion 102 is expanded and deployed, thereby releasing the airbag cushion 102 and the deployment-assisting fabric 152.

The tab 132 has a securing part 142 on an upper end side. The securing part 142 is provided as a square hole, and is secured to the roof side rail 114 (see FIG. 1(a)) using a clip, a bolt, or the like.

The tab 132 is provided with two slits 144a and 144b. Of the side edges 146a and 146b of the tab 132, the slits 144a and 144b are provided at the location below the securing part 142. The slits 144a and 144b hook onto the edges of the opening part 140 of the mini-wrap 138 to maintain the mini-wrap 138 in a state wrapped around the airbag cushion 102.

As depicted in FIG. 3(a), the slits 144a and 144b extend obliquely upward in a linear manner from the side edges 146a and 146b. With this shape, when the mini-wrap 138 is pulled in a direction in which the mini-wrap would come off of the tab 132, the mini-wrap 138 bites more deeply into the slits 144a and 144b, thereby making the mini-wrap less likely to come off the tab 132.

The tab 132 is provided with a reinforcing stitching part 148. The reinforcing stitching part 148 is continuously sewn along the upper side of the two slits 144a and 144b and the opening part 140. The regions 150a and 150b of the tab 132 above the slits 144a and 144b function as "barbs" for the mini-wrap 138. By providing the reinforcing stitching part 148, the rigidity of the "barb" regions 150a and 150b can be increased, reducing the likelihood of the mini-wrap 138 coming off.

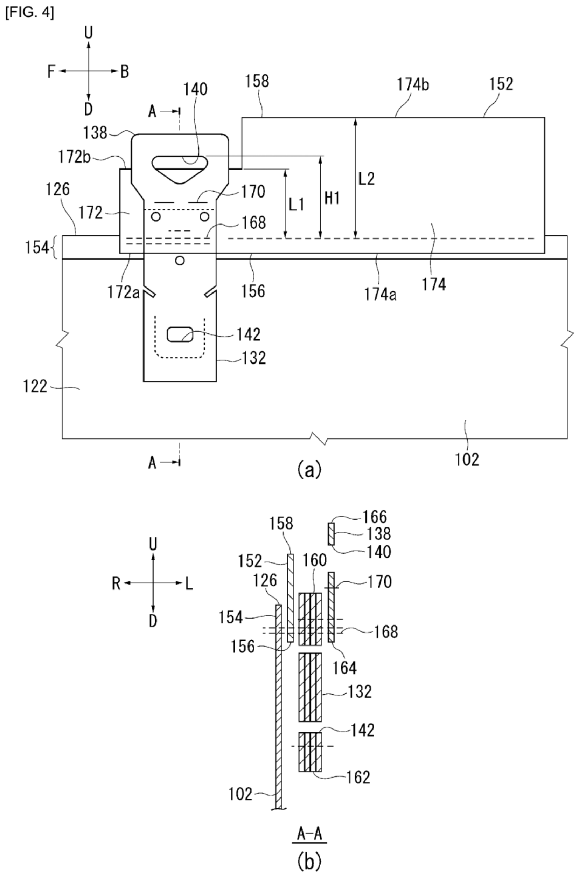

FIG. 4 is a view depicting the vicinity of the tab 132 of the airbag cushion 102 of FIG. 2(a). FIG. 4(a) is an enlarged view of the vicinity of the tab 132, taken from the same direction as FIG. 2(a).

The airbag cushion 102 of the present embodiment is provided with a deployment-assisting fabric 152 near the tab 132. The deployment-assisting fabric 152 is a fabric-like member that assists the expansion and deployment of the airbag cushion 102, and can be made from the same material as the expansion part and the like of the airbag cushion 102. The deployment-assisting fabric 152 spreads out when the airbag cushion 102 is expanded and deployed, and covers the structures surrounding the airbag cushion 102, thereby preventing the airbag cushion 102 from interfering with gaps and the like in the surrounding structures.

The tab 132 is sewn by a connecting part 168 to a non-expandable part 154 that forms the upper edge 126 of the airbag cushion 102, with an upper end thereof extending downward on the inside of the airbag cushion 102 in the vehicle width direction. The mini-wrap 138 is overlapped near a root of the tab 132 in an orientation in which an opening part 140 side is positioned upward, and the mini-wrap is sewn to the non-expandable part 154 together with the tab 132 by the connecting part 168.

FIG. 4(b) is a cross-sectional view along A-A of the airbag cushion 102 of FIG. 4(a). The deployment-assisting fabric 152 has a first side 156 connected to a non-expandable part 154 near the upper edge 126 of the airbag cushion 102, and a second side 158 is free.

The tab 132 has a first end 160 connected to the airbag cushion 102 near the upper edge 126 thereof and a second end 162 having the securing part 142 and that is a free end. The mini-wrap 138 has a first end 164 connected to the airbag cushion 102 near the tab 132, and a second end 166 that connects to the tab 132 using the opening part 140 while wrapped around the airbag cushion 102 in the stowed form.

The connecting part 168 is provided in a state in which the first side 156 of the deployment-assisting fabric 152, the first end 160 of the tab 132, and the first end 164 of the mini-wrap 138 are sewn to the non-expandable part 154 of an upper edge 126 of the airbag cushion 102, thereby integrally joining the deployment-assisting fabric, the tab, and the mini-wrap. This configuration allows the tab 132, mini-wrap 138, and deployment-assisting fabric 152 to be favorably connected to the non-expandable part 154 of the airbag cushion 102.

As depicted in FIG. 4(a), the mini-wrap 138 has a weakened part 170 on the connecting part 168 side as viewed from the opening part 140. The weakened part 170 is achieved by, for example, a slit. The mini-wrap 138 has the weakened part 170, and therefore breaks so as to be separated into the opening part 140 side and the connecting part 168 side immediately after the airbag cushion 102 starts to expand and deploy. This releases wrapping of the mini-wrap 138 from around the airbag cushion 102, enabling appropriate expansion and deployment of the airbag cushion 102.

The mini-wrap 138 is formed of nonwoven fabric, suppressing the strength thereof. If the mini-wrap 138 is formed of nonwoven fabric, the mini-wrap can be smoothly ruptured, starting from the weakened part 170 as the airbag cushion 102 expands and deploys.

The deployment-assisting fabric 152 has a dimension that varies along the longitudinal direction of the airbag cushion 102. For example, the deployment-assisting fabric 152 has, in the longitudinal direction of the airbag cushion 102 in the stowed form of FIG. 2(b), a first region 172 (see FIG. 4(a)) with small dimensions on the inflator insertion part 128 side, and a second region 174 with large dimensions on the side of the inflator insertion part 128 opposite that of the first region 172. More specifically, in the present embodiment, the first region 172 having smaller dimensions is provided in the area where the mini-wrap 138 wraps around, and the second region 174 having larger dimensions is provided in the area where the mini-wrap 138 and the tab 132 do not overlap.

The first region 172 is formed so that the dimension L1 from the connecting part 168 to a second side 172b in the circumferential direction when the airbag cushion 102 is in the stowed form falls within the range H1 from the connecting part 168 of the mini-wrap 138 to the end of the opening part 140.

The second region 174 is provided adjacent to the first region 172 in the longitudinal direction of the airbag cushion 102 in the stowed form. In the second region 174, a dimension L2 from the connecting part 168 to a second side 174b is larger than the dimension L1 of the first region 172 (L2>L1).

The second region 174 is positioned to overlap with an end part 176 (see FIG. 2(b)) of the cover member 136, and covers the gaps and steps between the cover member 136 and the roof side rail 114 (see FIG. 1(a)), thereby preventing the airbag cushion 102 from interfering with these gaps and steps.

The second side 174b of the second region 174 protrudes in a stepped manner from the second side 172b of the first region 172. The enlarged second region 174 covers gaps and steps between the cover member 136 (see FIG. 2(b)) and the surrounding structure, thereby preventing the airbag cushion 102 from interfering with these gaps or the like.

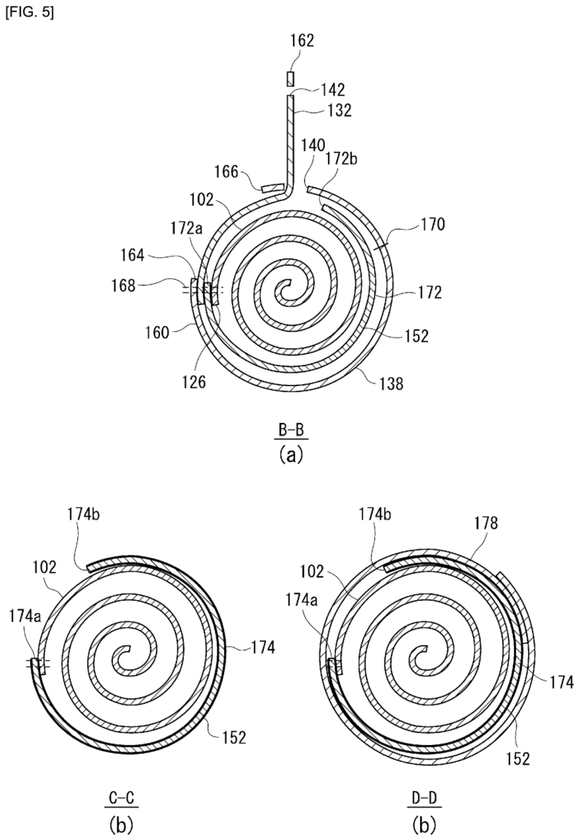

FIG. 5 is various cross-sectional views of the airbag cushion 102 of FIG. 2(a). FIG. 5(b) is a cross-sectional view along B-B of the airbag cushion 102 of FIG. 2(a).

The tab 132 has the first end 160 connected to the airbag cushion 102 near the upper edge 126 and the second end 162 that protrudes upwardly from the airbag cushion 102 in the stowed form.

The mini-wrap 138 has a first end 164 connected to the airbag cushion 102 near the tab 132, and a second end 166 that connects to the tab 132 using the opening part 140 while wrapped around the airbag cushion 102 in the stowed form.

The deployment-assisting fabric 152 is wrapped around the airbag cushion 102 in the stowed form by means of the mini-wrap 138.

The weakened part 170 of the mini-wrap 138 is provided in the area between the connecting part 168 and the opening part 140. The second side 172b of the first region 172 of the deployment-assisting fabric 152 is configured to be positioned between the weakened part 170 of the mini-wrap 138 and the opening part 140 in the circumferential direction of the airbag cushion 102 in the stowed form.

By providing the mini-wrap 138 with the weakened part 170, the mini-wrap 138 can be ruptured immediately after the start of expansion of the airbag cushion 102, thereby efficiently releasing wrapping of the mini-wrap 138. In addition, the first region 172 of the deployment-assisting fabric 152 is sized so that the second side 172b is positioned between the weakened part 170 of the mini-wrap 138 and the opening part 140, thereby preventing the airbag cushion from being pinched between the tab 132 and the airbag cushion 102, allowing for smooth deployment.

FIG. 5(b) is a cross-sectional view of the airbag cushion 102 of FIG. 2(a) along the line C-C. The second region 174 of the deployment-assisting fabric 152 covers a wider area in the circumferential direction of the airbag cushion 102 in the stowed form than the first region 172 (see FIG. 5(a)).

FIG. 5(c) is a cross-sectional view of the airbag cushion 102 of FIG. 2(a) along the line D-D. The second region 174 can be bundled by a tape 178 in the airbag cushion 102 in the stowed form. By adopting a tape 178 made of a material that can be ruptured by a force generated during expansion and deployment of the airbag cushion 102, the stowed form of the airbag cushion 102 can be released together with the mini-wrap 138 having a weakened part 170 (see FIG. 5(a)).

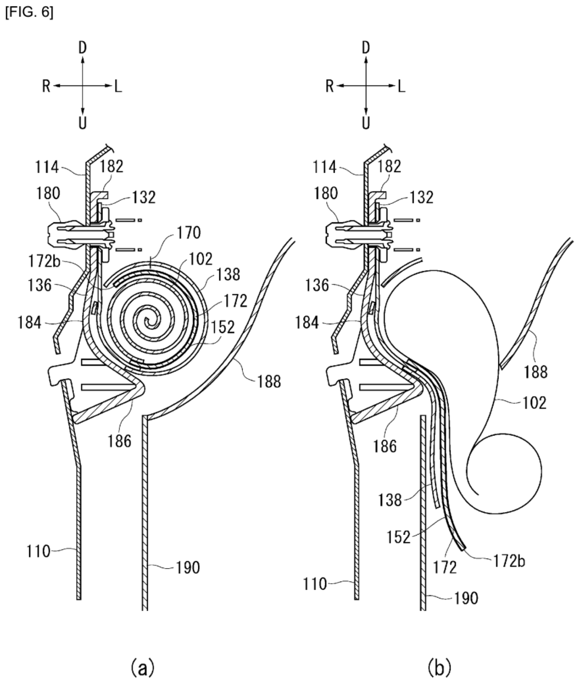

FIG. 6 is a view depicting an example of an appearance of the expansion and deployment of the airbag cushion 102 in FIG. 5(a). FIG. 6(a) is a view depicting a state in which the curtain airbag device 100 of FIG. 5(a) is attached to a roof side rail 114.

The cover member 136 is secured to the roof side rail 114 by using a clip 180. The clip 180 passes through the tab 132 and is inserted into a tab mounting part 182 of the cover member 136 and into the roof side rail 114.

The cover member 136 has a curved part 184 as a portion to which the airbag cushion 102 in the stowed form is attached. The curved part 184 is curved to fit the outer periphery of the airbag cushion 102 in the stowed form.

A jump part 186 is provided below the curved part 184 of the cover member 136. The jump part 186 is a portion that prevents the airbag cushion 102 from interfering with structures such as a pillar garnish 190 below the roof side rail 114, and extends obliquely from the curved part 184 toward the interior of the vehicle.

FIG. 6(b) is a view depicting an example of the curtain airbag device 100 of FIG. 6(a) expanding and deploying.

When gas is supplied to the airbag cushion 102, the jump part 186 guides the airbag cushion 102 toward the interior of the vehicle, and the airbag cushion 102 pushes against roof trim 188 and expands and deploys downward. In this manner, the jump part 186 enables the airbag cushion 102 to ride over the pillar garnish 190 and the like without interfering therewith, and to smoothly expand and deploy.

As depicted in FIG. 5(a), the second side 172b of the first region 172 of the deployment-assisting fabric 152 is configured to be positioned between the weakened part 170 of the mini-wrap 138 and the opening part 140 in the circumferential direction of the airbag cushion 102 in the stowed form. Therefore, as depicted in FIG. 6(b), the first region 172 can be smoothly deployed without being pinched between the airbag cushion 102 and the tab 132.

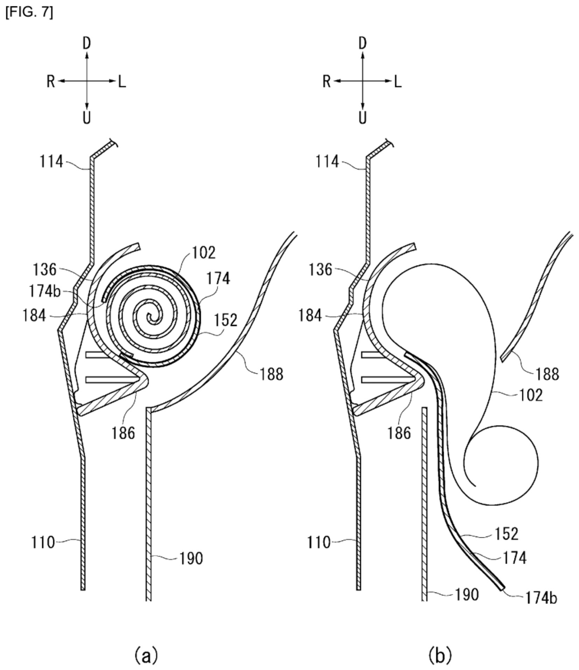

FIG. 7 is a view depicting an example of an appearance of the expansion and deployment of the airbag cushion 102 in FIG. 5(b). FIG. 7(a) is a view depicting a state in which the curtain airbag device 100 of FIG. 5(b) is attached to a roof side rail 114.

The deployment-assisting fabric 152 is disposed so that the second region 174 overlaps the end part 176 (see FIG. 2(b)) of the cover member 136. The second region 174 of the deployment-assisting fabric 152 can cover gaps and steps between the cover member 136 and surrounding structures such as the roof side rail 114 and pillar garnish 190 over a wider area than the first region 172 (see FIG. 6(a)).

FIG. 7(b) is a view depicting an example of the curtain airbag device 100 of FIG. 7(a) expanding and deploying.

The second region 174 can cover the gaps and steps between the cover member 136 and the surrounding roof side rail 114 and pillar garnish 190, thereby preventing the airbag cushion 102 from interfering with these gaps or the like.

Thus, according to the present embodiment, when the stowed form of the airbag cushion 102 is released and the airbag cushion expands and deploys, the second region 174 of the deployment-assisting fabric 152 covers gaps and steps between the cover member 136 and surrounding vehicle cabin side walls and pillars, thereby enabling prevention of interference of the airbag cushion 102 with such gaps and the like.

As depicted in FIG. 4(a), the first region 172 is set to have a smaller size than the second region 174. For example, in FIG. 5(a), if the deployment-assisting fabric 152 is long enough to reach the tab 132 when wrapped around the airbag cushion 102, even if the mini-wrap 138 breaks when the airbag cushion 102 expands and deploys, the deployment-assisting fabric 152 will be pinched between the expanding airbag cushion 102 and the tab 132 and will not easily spread downward, which may slow down the deployment of the airbag cushion 102.

On the other hand, for example, in FIG. 6(a), if the deployment-assisting fabric 152 is made too short in the circumferential direction of the airbag cushion 102 so as to not reach the tab 132, the deployment-assisting fabric 152 may not be able to completely cover the gap between the cover member 136 and the upper end of the pillar garnish 190.

Therefore, in the present embodiment, the first region 172 of the deployment-assisting fabric 152, which is bound by the tab 132 and the mini wrap 138, is set to a dimension such that the second side 172b does not come into contact with the tab 132 when the deployment-assisting fabric 152 is wrapped around the airbag cushion 102 as depicted in FIG. 6(a), and the second side 172b reaches below the upper end of the pillar garnish 190 so that the deployment-assisting fabric 152 can cover the gap between the cover member 136 and the upper end of the pillar garnish 190 when wrapping of the deployment-assisting fabric 152 is released as depicted in FIG. 6(b).

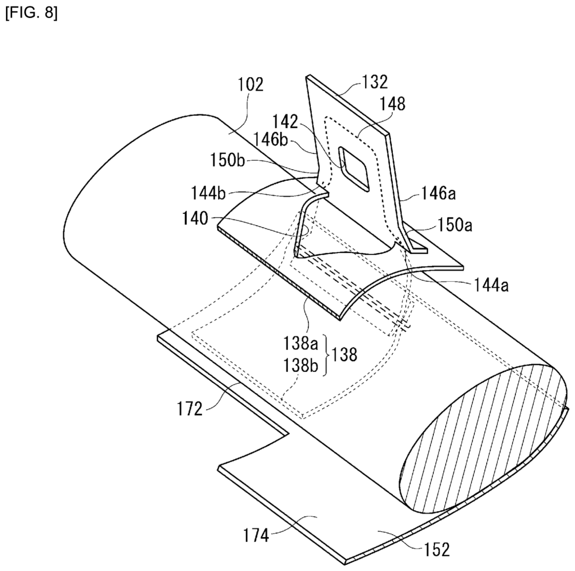

FIG. 8 is a view depicting an example of the airbag cushion 102 of FIG. 3(b) in an initial state when expansion and deployment has begun. When the airbag cushion 102 begins to expand and deploy, the mini-wrap 138 breaks at the weakened part 170 (see FIG. 3(b)) and separates into the tip end part 138a and the root part 138b, releasing the airbag cushion 102 and the deployment-assisting fabric 152.

The deployment-assisting fabric 152 has a first region 172 (see FIG. 4(a)) with a small dimension on the inflator insertion part 128 side (see FIG. 2(b)) in the longitudinal direction of the airbag cushion 102 in the stowed form, and a second region 174 with a large dimension on the side of the inflator insertion part 128 opposite from the first region 172. In other words, the first region 172 is provided on the upstream side of the gas flow, on the side where expansion and deployment begins, and the second region 174 is provided on the downstream side of the gas flow.

In the deployment-assisting fabric 152 of the present embodiment, the dimension of the first region 172 is shorter than the dimension of the second region 174 in the circumferential direction of the airbag cushion 102 in the stowed form. By providing the first region 172 having a short dimension on the inflator insertion part 128 side, the airbag cushion 102 can be expanded and deployed without causing gas blockage due to wrapping of the deployment-assisting fabric 152, in other words, without blocking the flow of gas by the deployment-assisting fabric 152. As the airbag cushion 102 expands and deploys from the inflator insertion part 128 side, the deployment-assisting fabric 152 can be smoothly unwrapped. In other words, when the deployment-assisting fabric 152 is wrapped, the deployment-assisting fabric is unwrapped starting from the first region 172, which is short in the circumferential direction, allowing smooth deployment without being caught in the airbag cushion 102 or being pinched between surrounding structures.

With the above configuration, the deployment-assisting fabric 152 deploys smoothly from the first region 172 side, while the second region 174 covers the gap between the cover member 136 (see FIG. 7 (b)) and the upper end of the pillar garnish 190, thereby enabling the airbag cushion 102 to be quickly expanded and deployed to the desired area.

As described above, the curtain airbag device 100 of the present embodiment can maintain smooth deployment behavior of the airbag cushion 102 and can quickly expand and deploy the airbag cushion 102 within a target area. In addition, with the present embodiment, the configuration is simple and the use of parts made of other materials is suppressed; thereby suppressing increases in manufacturing costs.

### (Modified Example)

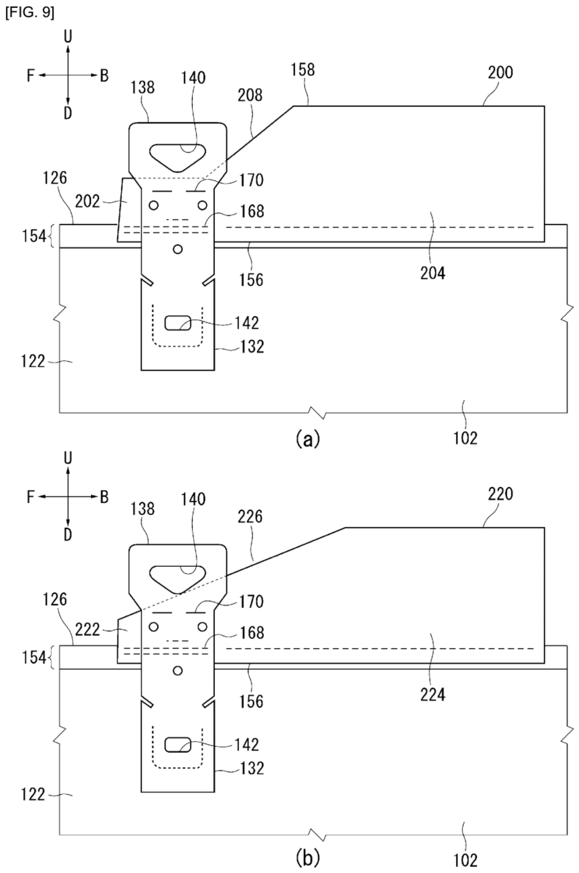

Modified examples of each of the above-described components are described below. In FIG. 9, the same codes are attached to the same structural elements as described above, and a description of the aforementioned structural elements is omitted. In the following description, components having the same name as a component already described are assumed to have the same function unless otherwise specified, even if marked with a different sign.

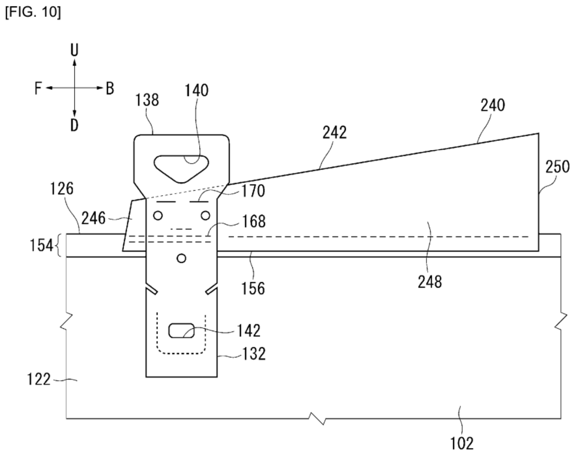

FIG. 9 and FIG. 10 are views depicting a modified example of the deployment-assisting fabric 152 of FIG. 4(a). FIG. 9(a) is a view depicting Modified Example 1 (a deployment-assisting fabric 200) of the deployment-assisting fabric 152 of FIG. 4(a).

The deployment-assisting fabric 200 also has a second region 204 with a larger dimension than that of the first region 202. In particular, a front portion 208 of a second side 206 of the second region 204 is tapered such that a dimension of the second region 204 gradually widens from the first region 202.

The deployment-assisting fabric 200 also covers gaps and steps between the cover member 136 and surrounding structures, enabling prevention of the airbag cushion 102 interfering with these gaps and steps. In particular, the shape of the deployment-assisting fabric 200 changes smoothly from the first region 202 to the second region 204 due to the front portion 208, preventing localized concentration of force and enabling smooth deployment.

FIG. 9(b) is a view depicting Modified Example 2 (a deployment-assisting fabric 220) of the deployment-assisting fabric 152 of FIG. 4(a).

With the deployment-assisting fabric 220, the second side 226 of the first region 222 is tapered so that the dimension of the first region 222 gradually widens toward the second region 224.

The deployment-assisting fabric 220 also covers gaps and steps between the cover member 136 and surrounding structures, enabling prevention of the airbag cushion 102 interfering with these gaps and steps. In particular, the shape of the deployment-assisting fabric 220 in the first region 222 changes smoothly toward the second region 224, preventing localized concentration of force and enabling smooth deployment.

FIG. 10 is a view depicting Modified Example 3 (a deployment-assisting fabric 240) of the deployment-assisting fabric 152 of FIG. 4(a).

A second side 242 of the deployment-assisting fabric 240 is tapered so that the dimension of the deployment-assisting fabric 240 gradually widens from an end part 246 on a first region 244 side to an end part 250 on a second region 248 side.

The deployment-assisting fabric 240 also covers gaps and steps between the cover member 136 and surrounding structures, enabling prevention of the airbag cushion 102 interfering with these gaps and steps. In particular, the overall shape of the deployment-assisting fabric 240 changes smoothly from the first region 244 to the second region 248, preventing localized concentration of force and enabling smooth deployment.

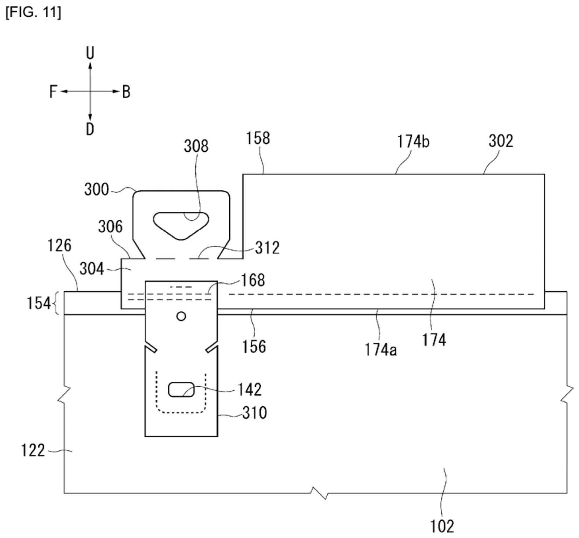

FIG. 11 is a view depicting a modified example of the mini-wrap 138 of FIG. 4. The mini-wrap 300 depicted in FIG. 11 differs from the above-described embodiments in being formed integrally with a deployment-assisting fabric 302.

The mini-wrap 300 is provided within the area of a first region 304 of the deployment-assisting fabric 302 so as to protrude from a second side 306 of the first region 304. The mini-wrap 300 can also retain the deployment-assisting fabric 302 wrapped around the airbag cushion 102 (see FIG. 3(a)) in the stowed form by hooking an opening part 308 onto a tab 310.

The mini-wrap 300 is provided with a slit-shaped weakened part 312 at a location along the second side 306 of the first region 304. The weakened part 312 breaks when the airbag cushion is expanded and deployed, and the area including the opening part 308 of the mini-wrap 300 can be separated from the deployment-assisting fabric 302. This releases the wrapping of the deployment-assisting fabric 302, allowing the airbag cushion 102 (see FIG. 3(a)) to be released.

In this manner, even with the mini-wrap 300 formed integrally with the deployment-assisting fabric 302, the deployment-assisting fabric 302 can be efficiently wrapped around the airbag cushion 102 in the stowed form by hooking the opening part 308 of the mini-wrap 300 onto the tab 310.

Note that the shape of the deployment-assisting fabric 302 integrally formed with the mini-wrap 300 can be changed to the same shape as the deployment-assisting fabric 200 in FIG. 9(a), the deployment-assisting fabric 220 in FIG. 9(b), or even the deployment-assisting fabric 240 in FIG. 10. By forming the mini-wrap 300 integrally with these deployment-assisting fabrics 200, 220, 240, both the above-described function and effect of the mini-wrap 300 and the function and effect of the deployment-assisting fabrics 200, 220, 240 can be obtained.

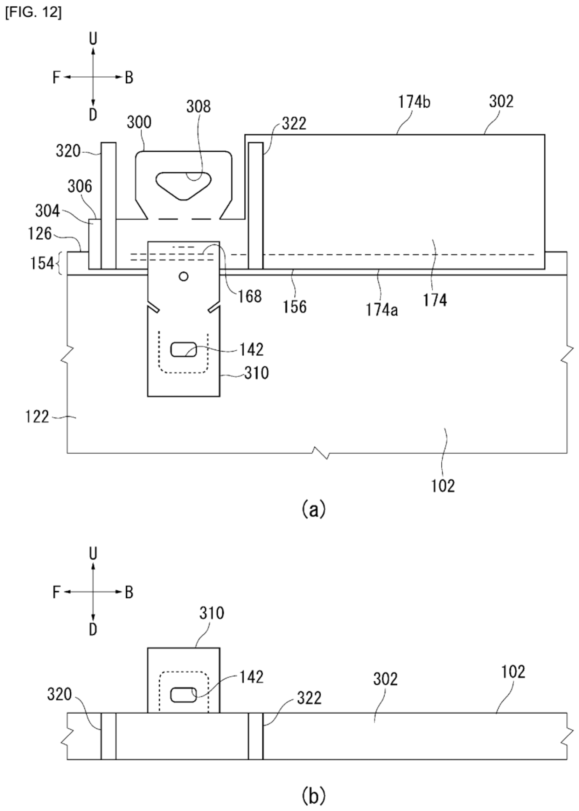

FIG. 12 depicts an example in which tapes 320 and 322 are applied to the mini-wrap 300 of FIG. 11. FIG. 12(a) depicts tapes 320 and 322 according to FIG. 11.

The tapes 320 and 322 can be used to wrap the deployment-assisting fabric 302 around the airbag cushion 102 in the stowed form (see FIG. 12(b)) on both sides of the mini-wrap 300. The tapes 320 and 322 are made of a material that can be broken by the expansion pressure of the airbag cushion 102, and break at approximately the same time as the weakened part 312, allowing the deployment-assisting fabric 302 and the airbag cushion 102 to be released.

The deployment-assisting fabric 302 may extend the first region 304 in a direction away from the mini-wrap 300, taking into consideration the tapes 320 and 322 being provided.

FIG. 12(b) is a view depicting an example of the stowed form of the airbag cushion 102 of FIG. 12(a). In this modified example, by using the tapes 320 and 322 together with the mini-wrap 300, the stowed form of the airbag cushion 102 can be efficiently maintained.

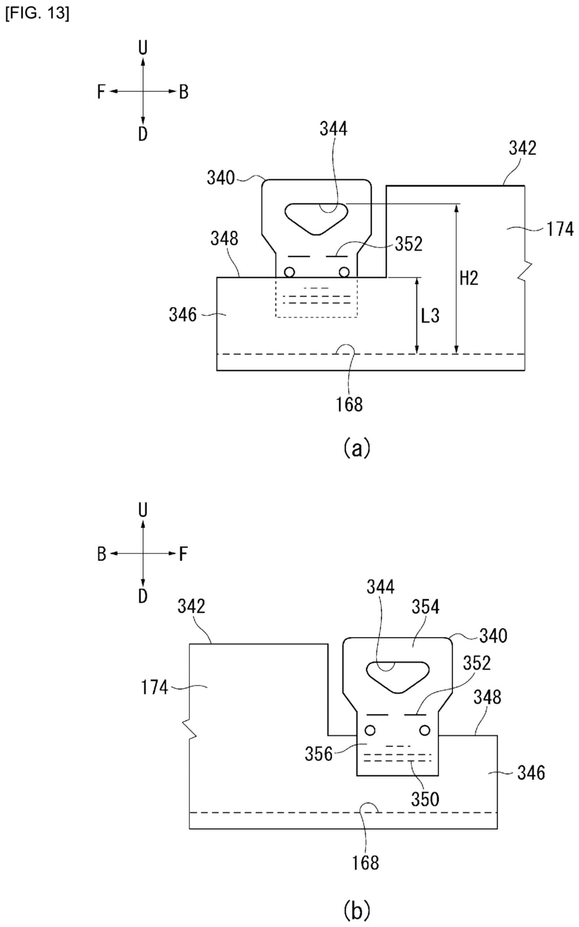

FIG. 13 depicts a further modified example of the mini-wrap 138 of FIG. 4. FIG. 13(a) is a view depicting a mini-wrap 340 according to FIG. 4. The mini-wrap 340 is provided as a separate member from the tab 310 and the deployment-assisting fabric 342.

The mini-wrap 340 is a short, strip-shaped member, and is arranged so that an opening part 344 protrudes from a second side 348 of a first region 346 of the deployment-assisting fabric 342. At this time, the first region 346 has a dimension L3 from the connecting part 168 to the second side 348 that falls within an area H2 from the connecting part 168 to the tip end side of the opening part 344 of the mini-wrap 340.

FIG. 13(b) is a view depicting the mini-wrap 340 of FIG. 13(b) from the opposite side. The mini-wrap 340 is attached to the deployment-assisting fabric 342 by a sewn joint part 350. The mini-wrap 340 also has a slit-shaped weakened part 352, which allows a tip end part 354 having the opening part 344 to be separated from a base part 356 when the airbag cushion 102 (see FIG. 6(b)) is expanded and deployed.

In this modified example as well, the mini-wrap 340 can be used to efficiently wrap the deployment-assisting fabric 342 around the airbag cushion 102 in the stowed form (see FIG. 3(a)). In particular, in this modified example, since the mini-wrap 340 is independent of the deployment-assisting fabric 342 and the tab 310 (see FIG. 11), the mini-wrap 340 can be changed to a material different from that of the deployment-assisting fabric 342 and the tab 310. For example, in this modified example, the mini-wrap 340 can be made of a material that is easily broken at the weakened part 352 or a material with high rigidity.

Note that the shape of the deployment-assisting fabric 342 to which the mini-wrap 340 is attached can be changed to the same shape as the deployment-assisting fabric 200 in FIG. 9(a), the deployment-assisting fabric 220 in FIG. 9(b), or even the deployment-assisting fabric 240 in FIG. 10. By implementing the mini-wrap 340 on these deployment-assisting fabrics 200, 220, 240, both the above-described function and effect of the mini-wrap 340 and the function and effect of the deployment-assisting fabrics 200, 220, 240 can be obtained.

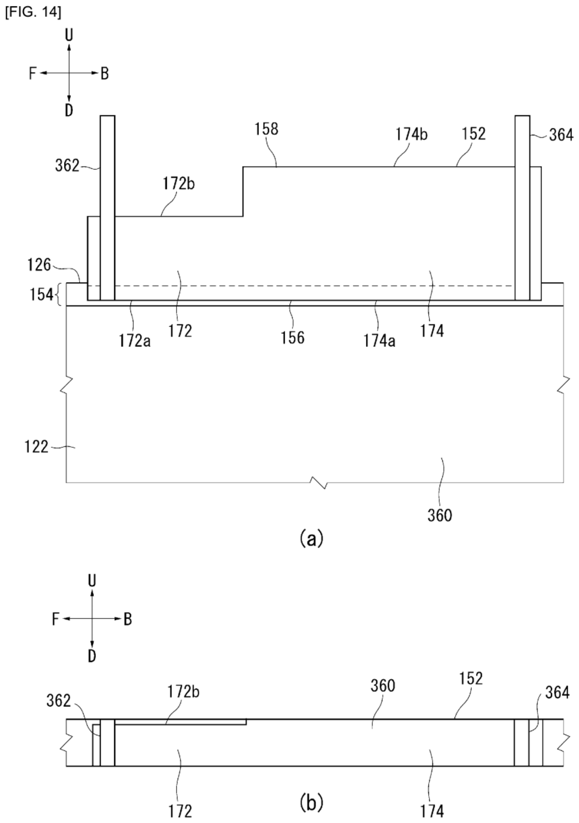

FIG. 14 is a view depicting a modified example of the airbag cushion 102 in FIG. 4(a) (airbag cushion 360). FIG. 14(a) is a view depicting the airbag cushion 360 corresponding to FIG. 4(a).

Similar to the airbag cushion 102 in FIG. 4(a), the airbag cushion 360 includes a chamber 122 which is an expansion region, a non-expandable part 154 which forms the upper edge 126, and a deployment-assisting fabric 152 connected to the non-expandable region [sic] 154.

In the airbag cushion 360, the tab 132 and mini-wrap 138 of FIG. 4(a) are omitted, and tapes 362 and 364 are used in their place. The tapes 362 and 364 can be used at the end part on the first region 172 side and the end part on the second region 174 side of the deployment-assisting fabric 152.

FIG. 14(b) is a view depicting an example of the stowed state of the airbag cushion 360 of FIG. 14(a). The deployment-assisting fabric 152 is wrapped around the airbag cushion 360 in the stowed form and fastened at both ends with tapes 362 and 364. The tapes 362 and 364 can bind the end parts of the deployment-assisting fabric 152 using adhesive force.

The tapes 362 and 364 are made of a material that can be broken by the force of gas when the airbag cushion 360 is expanded. Similar to the mini-wrap 138 in FIG. 8, the tapes 362 and 364 also break when the airbag cushion 360 is expanded and deployed, releasing the airbag cushion 360 and the deployment-assisting fabric 152.

In this manner, the tapes 362 and 364 also enable the airbag cushion 360 to maintain the stowed form of the airbag cushion 360 and the wrapping of the deployment-assisting fabric 152. The airbag cushion 360 also has the first region 172 provided on the inflator insertion part 128 (see FIG. 2 (b)) side, and is able to expand and deploy without gas blockage being caused due to wrapping of the deployment-assisting fabric 152, in other words, without the deployment-assisting fabric 152 blocking the flow of gas. As the airbag cushion 102 expands and deploys from the inflator insertion part 128 side, the tapes 362 and 364 can be broken and the deployment-assisting fabric 152 can be smoothly unwrapped.

With the above configuration, the airbag cushion 360 can be quickly expanded and deployed to the desired area by the deployment-assisting fabric 152 smoothly deploying from the first region 172 side, while the second region 174 covers the gap between the cover member 136 (see FIG. 7 (b)) and the upper end of the pillar garnish 190.

Preferred examples of the present invention were described above while referring to the attached drawings. However, the embodiments described above are preferred examples of the present invention, and other embodiments can be implemented or performed by various methods. In particular, unless described otherwise in the specification of the present application, the invention is not limited to the shape, size, configurational disposition, and the like of parts depicted in detail in the attached drawings. Furthermore, expressions and terms used in the specification of the present application are used for providing a description, and the invention is not limited thereto, unless specifically described otherwise.

Therefore, a person of ordinary skill in the art could obviously conceive of various changed examples or modified examples within the scope described in the scope of the claims, which is understood to naturally belong to the technical scope of the present invention.

### INDUSTRIAL APPLICABILITY

The present invention can be used in a curtain airbag device that protects an occupant in the event of a vehicle side collision or rollover.

### DESCRIPTION OF CODES

H1. Area, L1. Dimension, L2. Dimension, 100. Curtain airbag device, 102. Airbag cushion, 104. Front row seat, 106. Back row seat, 108. A-pillar, 110. B-pillar, 112. C-pillar, 114. Roof side rail, 116. Inflator, 118. Side window, 120. Chamber, 122. Chamber, 124. Seam part, 126. Upper edge, 128. Inflator insertion part, 130. Duct part, 132. Tab, 134. Strap, 136. Cover member, 138. Mini-wrap, 138a. Tip end part, 138b. Root part, 140. Opening part, 142. Securing part, 144a. Slit, 146a. Side edge, 148. Reinforcing stitching part, 150a. Region, 152. Deployment-assisting fabric, 154. Non-expandable part, 156. First side, 158. Second side, 160. First end, 162. Second end, 164. First end, 166. Second end, 168. Connecting part, 170. Weakened part, 172. First region, 172a. First side, 172b. Second side, 174. Second region, 174a. First side, 174b. Second side, 176. End part, 178. Tape, 180. Clip, 182. Tab mounting part, 184. Curved part, 186. Jump part, 188. Roof trim, 190. Pillar garnish, 200. Deployment-assisting fabric, 202. First region, 204. Second region, 206. Second side, 208. Front portion, 220. Deployment-assisting fabric, 222. First region, 224. Second region, 226. Second side, 240. Deployment-assisting fabric, 242. Second side, 244. First region, 246. End part, 248. Second region, 250. End part, 260. Airbag cushion, 262. Deployment-assisting fabric, 300. Mini-wrap, 302. Deployment-assisting fabric, 304. First region, 306. Second side, 308. Opening part, 310. Tab, 312. Weakened part, 320, 322. Tape, 340. Mini-wrap, 342. Deployment-assisting fabric, 344. Opening part, 346. First region, 348. Second side, 350. Joint part, 352. Weakened part, 354. Tip end part, 356. Base part, H2. Area, L3. Dimension, 360. Airbag cushion, 362, 364. Tape,

## Claims

1. A curtain airbag device, comprising:
an airbag cushion that is wound or folded into a stowed form elongated in a vehicle front-to-back direction and mounted to an upper part of a vehicle cabin side wall; and
an inflator that supplies gas to the airbag cushion, wherein
the curtain airbag device further includes:
a tab having a band shape, the tab protruding upward from the airbag cushion in the stowed form and being secured to the vehicle cabin side wall;
a deployment-assisting fabric having a fabric shape with a first side connected to the airbag cushion in the stowed form and a second side that is free;
a connecting part that connects the first side of the deployment-assisting fabric to the airbag cushion;
a mini-wrap protruding from a prescribed location on the second side of the deployment-assisting fabric;
an opening part formed in the mini-wrap and configured to be hooked onto the tab; and
a cover member extending along a prescribed area in a longitudinal direction of the airbag cushion in the stowed form and covering the vehicle cabin side wall side of the airbag cushion, wherein
the deployment-assisting fabric is maintained in a state wrapped around the airbag cushion in the stowed form by hooking the opening of the mini-wrap onto the tab,
the deployment-assisting fabric includes:
a first region formed in an area in which the mini-wrap is provided; and
a second region provided adjacent to the first region in the longitudinal direction of the airbag cushion in the stowed form, the second region having a dimension from the connecting part to the second side that is greater than that of the first region, and
the deployment-assisting fabric is arranged such that the second region overlaps at least an end part of the cover member.

2. The curtain airbag device according to claim 1, wherein the mini-wrap is strip-shaped and attached to the deployment-assisting fabric such that the opening part protrudes from the second side of the deployment-assisting fabric.

3. The curtain airbag device according to claim 2, wherein
the connecting part connects the mini-wrap to the airbag cushion together with the first side of the deployment-assisting fabric, and
the first region has a dimension from the connecting part to the second side that falls within an area from the connecting part of the mini-wrap to the opening part.

4. The curtain airbag device according to claim 3, wherein
the mini-wrap has a weakened part provided in an area between the connecting part and the opening part, the weakened part enabling rupture of the mini-wrap during expansion and deployment of the airbag cushion, and
the second side of the first region is positioned, in a circumferential direction of the airbag cushion in the stowed form, between the weakened part of the mini-wrap and the opening part.

5. The curtain airbag device according to claim 1, wherein the mini-wrap is formed integrally with the deployment-assisting fabric.

6. The curtain airbag device according to claim 4, wherein the mini-wrap has a weakened part provided at a prescribed location, the weakened part being configured to rupture during expansion and deployment of the airbag cushion and to separate an area including the opening part from the deployment-assisting fabric.

7. A curtain airbag device, comprising:
an airbag cushion that is wound or folded into a stowed form elongated in a vehicle front-to-back direction and attached to an upper part of a vehicle cabin side wall; and
an inflator that supplies gas to the airbag cushion, wherein
the curtain airbag device further includes:
an inflator insertion part into which the inflator is inserted; and
a deployment-assisting fabric having a fabric shape with a first side connected to the airbag cushion in the stowed form by a prescribed connecting part and a second side that is free, and
the deployment-assisting fabric includes:
a first region formed, in a longitudinal direction of the airbag cushion in the stowed form, on the inflator insertion part side; and
a second region provided, in the longitudinal direction, on a side opposite to the inflator insertion part as viewed from the first region, the second region having a dimension from the connecting part to the second side that is greater than that of the first region.

8. The curtain airbag device according to any one of claims 1 to 7, wherein the second side of the second region protrudes in a stepped shape from the second side of the first region.

9. The curtain airbag device according to any one of claims 1 to 7, wherein the second side of the second region is tapered so that a dimension of the second region gradually widens from the first region.

10. The curtain airbag device according to any one of claims 1 to 7, wherein the second side of the first region is tapered so that a dimension of the first region gradually widens toward the second region.

11. The curtain airbag device according to any one of claims 1 to 7, wherein the second side of the deployment-assisting fabric is tapered so that a dimension of the deployment-assisting fabric gradually widens from an end part on the first region side toward an end part on the second region side.

12. The curtain airbag device according to any one of claims 1 to 4, wherein the mini-wrap is formed of nonwoven fabric.

13. The curtain airbag device according to claim 4 or 6, wherein the weakened part is formed as a slit.

14. The curtain airbag device according to claim 3, wherein the connecting part integrally joins the mini-wrap, a first side of the deployment-assisting fabric, a first end of the tab, and a non-expandable part of the airbag cushion.

15. The curtain airbag device according to any one of claims 1 to 6, further comprising:
tapes provided on both sides of the mini-wrap and configured to wrap the deployment-assisting fabric around the airbag cushion in the stowed form, wherein
the tapes can be ruptured by the expansion pressure of the airbag cushion.
